# EUROPEAN PATENT SPECIFICATION

(11) **EP 3 178 073 B1**
(45) Date of publication and mention of the grant of the patent: **28.06.2023**
(21) Application number: 15750354.1
(22) Date of filing: 06.08.2015
(51) Int. Cl.: G07F 7/12, H04L 9/32

(54) **SECURITY MANAGEMENT SYSTEM FOR REVOKING A TOKEN FROM AT LEAST ONE SERVICE PROVIDER TERMINAL OF A SERVICE PROVIDER SYSTEM**
SICHERHEITSVERWALTUNGSSYSTEM ZUR SYSTEM ZUR ENTZIEHUNG EINES TOKEN AUS MINDESTENS EINEM DIENSTANBIETERENDGERÄT EINES DIENSTANBIETERSYSTEMS
SYSTÈME DE GESTION DE SÉCURITÉ PERMETTANT DE RÉVOQUER UN JETON À PARTIR D'AU MOINS UN TERMINAL DE FOURNISSEUR DE SERVICES D'UN SYSTÈME DE FOURNISSEUR DE SERVICES

(30) Priority: 06.08.2014 EP 14306242
(43) Date of publication of application: 14.06.2017
(73) Proprietor: Thales Dis France SAS, 92190 Meudon (FR)
(72) Inventor: WEBSTER, Michael, F-92190 Meudon (FR); GOUGET, Aline, F-92190 Meudon (FR); DEBOIS, Georges, F-92190 Meudon (FR)
(74) Representative: Lotaut, Yacine Diaw
(86) International application number: PCT/EP2015/068199
(87) International publication number: WO 2016/020497

(56) References cited:
- WO-A1-00/08610
- WO-A2-99/62210
- GB-A- 2 459 662
- US-A1- 2005 120 205
- US-A1- 2012 324 233

## Description

### TECHNICAL FIELD

The present invention relates to a security management system comprising a plurality of tokens, a revocation management system and a service provider system comprising at least one service provider terminal. The invention also relates to an associated revocation management method and to an associated verification management method.

Such a security management system may be used in a non-limitative example in any system which needs protection of the privacy of a token's user.

### BACKGROUND OF THE INVENTION

A security management system comprising a plurality of tokens, such as electronic identity cards in a non-limitative example, comprises a specific blacklist for each service provider. A blacklist includes for example the serial numbers of all the tokens which are revoked from a service provider system. The revoked tokens are the ones which:
- are used illegitimately ; or
- are used inappropriately ; or
- have been lost; or
- is no longer up-to-date.

A first problem of this first prior art, is that the public key or the serial number constitutes a token specific identifier, which acts as a direct link to the token owner's identity. A second problem of this first prior art, is that each service provider of the service provider system will have to be aware of the tokens which are revoked from the service provider system. A specific blacklist is therefore periodically sent to all the service providers a token's user has access to. This can affect the privacy of the token's users. For example, if only one token has been revoked since the last update of the specific blacklist, the service providers could collude when receiving the updated specific blacklists. All the past transactions on the service provider system of a token's user become linkable once the revocation of said token is requested.

Instead of relying on specific blacklists, other security management systems rely on specific white lists which include the public keys or the serial numbers of all the tokens which are not revoked from a service provider system, that is to say which are valid. The same problem as for the specific blacklists takes place for this second prior art. Document US2012/324233 discloses a method and system for managing the validity of a security token. Each service provider has access to a public key associated with the user to determine membership or non-membership in either a group of revoked security tokens or valid security tokens (i.e.a blacklist and a whitelist). This way of verifying the state of the token involves the use of groups of tokens which may be accessible by different service providers, thus endangering the privacy of the tokens. Further it is not disclosed that the verification of the revocation status of the security element is made by the service provider from a value of an attribute that is stored in the security element itself.

### SUMMARY OF THE INVENTION

It is an object of the invention to provide a security management system which indicates if a token is revoked or not from at least one service provider terminal of said provider system with respect to the privacy of a token's user and without any possibility for the service provider terminals to perform data linkage with each other on said tokens.

To this end, there is provided a security management system comprising a plurality of tokens, a revocation management system and a service provider system comprising at least one service provider terminal, wherein :
- each token comprises at least one status attribute, said at least one status attribute indicating if a token is revoked or not from at least one service provider terminal of said service provider system ;
- said revocation management system comprises a revocation management terminal, said revocation management terminal comprising a token status list which comprises first data corresponding to the tokens which are revoked or corresponding to the tokens which are not revoked, and said revocation management terminal being adapted to :
   - read said first data from a token;
   - check said first data against the token status list;
   - update the at least one status attribute of said token according to said checking;
- said service provider terminal is adapted to verify if a token is revoked from it, or not, said verification being based on the at least one status attribute of said token.

As we will see in further details, there is no propagation of a blacklist, as it is the token in itself which proves if it has been revoked or not. Furthermore, the privacy is maintained as the revocation management system doesn't know which service provider terminals the token's user has access to.

According to non-limitative embodiments of the invention, the security management system in accordance with the invention further comprises the following characteristics.

In a non-limitative embodiment, the first data are a revocation pseudonym or an identifier of a token.

In a non-limitative embodiment,
- a token is adapted to :
   - transmit the status attribute to a service provider terminal upon request of said service provider terminal;
- the service provider terminal is further adapted to :
   - request from said token the at least one status attribute after one of its services has been requested by the user of said token;
   - grant access to said service if said token is not revoked from it.

In a non-limitative embodiment, the update of the at least one status attribute of said token is performed by the revocation management terminal upon request of said service provider terminal if said at least one status attribute is not available or not up-to-date.

In a non-limitative embodiment,
- the token is further adapted to compute a service pseudonym and to transmit said service pseudonym to said service provider terminal when a service has been requested by the user of said token, said service pseudonym being based on a service public key of said service provider terminal;
- the service provider terminal requests the at least one status attribute from the said token using an associated service pseudonym of said token.

In a first non-limitative embodiment,
- said revocation management system further comprises an identity management terminal adapted to :
   - define an identifier for a token;
   - compute the revocation pseudonym associated to a token according to said identifier;
   - if said token is to be included in the token status list, transmit said revocation pseudonym associated to said token to said revocation management terminal;
- said revocation management terminal is further adapted to update said token status list with said revocation pseudonym.

In a second non-limitative embodiment,
- said revocation management system further comprises an identity management terminal adapted to :
   - define an identifier for a token;
   - if said token is to be included in the token status list, transmit second data representative of said token to said revocation management terminal; and
- said revocation management terminal is further adapted to :
   - receive said second data from said identity management terminal;
   - compute the revocation pseudonym associated with said token according to said second data and to a revocation public key; and
   - update said token status list with said revocation pseudonym.

In a non-limitative embodiment, a token is further adapted to perform an authentication of a service provider terminal.

In a non-limitative embodiment, a service provider terminal is further adapted to perform an authentication of a token.

In another non-limitative embodiment, said revocation management terminal and a token are further adapted to perform a mutual authentication.

In a non-limitative embodiment, said at least one status attribute is signed with a signature.

In a first non-limitative variant, said signature is computed by the token according to the at least one status attribute.

In a second non-limitative variant, said signature is computed by the revocation management terminal according to a blinded or partially blinded message sent by said token.

In a non-limitative embodiment, said signature is computed :
- upon request of the service provider terminal;
- upon decision of the token.

In addition, there is provided a revocation management system comprising a revocation management terminal, said revocation management terminal comprising a token status list which comprises first data corresponding to the tokens which are revoked or corresponding to the tokens which are not revoked from at least one service provider terminal of the service provider system, said revocation management terminal being adapted to :
- read said first data from a token;
- check said first data against said token status list;
- update the status attribute of said token according to said checking.

In addition, there is provided a service provider system comprising at least one service provider terminal, said service provider terminal being adapted to verify if a token is revoked from it, or not, said verification being based on at least one status attribute of said token, said at least one status attribute indicating if said token is revoked or not from at least one service provider terminal of the service provider system.

In addition, there is provided a revocation management method for revoking or not revoking a token from at least one service provider terminal of a service provider system, said token comprising at least one status attribute, wherein said revocation management method comprises:
- the reading of said first data from a token by means of a revocation management terminal, said revocation management terminal comprising a token status list which comprises first data corresponding to the tokens which are revoked or corresponding to the tokens which are not revoked from at least one service provider terminal;
- the checking of said first data against said token status list by means of said revocation management terminal;
- the update of the at least one status attribute of said token according to said checking by means of said revocation management terminal.

In addition, there is provided a verification management method for verifying if a token is revoked or not from at least one service provider terminal of said the service provider system, said verification being based on at least one status attribute of said token and being performed by means of a service provider terminal of said service provider system.

In a non-limitative embodiment, said verification management method further comprises :
- the request by said service provider terminal to said token for the at least one status attribute after one of its service has been requested by the user of said token;
- the transmission by said token of the at least one status attribute to said service provider terminal;
- according to said at least one status attribute, the verification by said service provider terminal if said token is revoked from it, or not ; and
- the grant of access to said service by said service provider terminal if said token is not revoked.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates schematically a security management system according to a non-limitative embodiment of the invention;
- Fig. 2 illustrates schematically a non-limitative embodiment of a revocation management system of the security management system of Fig. 1;
- Fig. 3 illustrates schematically a non-limitative embodiment of a token of the security management system of Fig. 1;
- Fig. 4 illustrates schematically a non-limitative embodiment of a service provider system of the security management system of Fig. 1;
- Fig. 5 is a schematic organization chart of a revocation management method carried out by the revocation management system of Fig. 2;
- Fig. 6 is a schematic organization chart of a verification management method carried out by a service provider terminal of the service provider system of Fig. 4;
- Fig.7 is a first sequence diagram illustrating the revocation management method of Fig. 5 and the verification management method of Fig. 6 according to a first non-limitative embodiment;
- Fig. 8 is a second sequence diagram illustrating the revocation management method of Fig. 5 and the verification management method of Fig. 6 according to a second non-limitative embodiment.

### DESCRIPTION OF EMBODIMENTS OF THE INVENTION

In the following description, well-known functions or constructions by the man skilled in the art are not described in detail since they would obscure the invention in unnecessary detail.

The present invention relates to a security management system SYS.

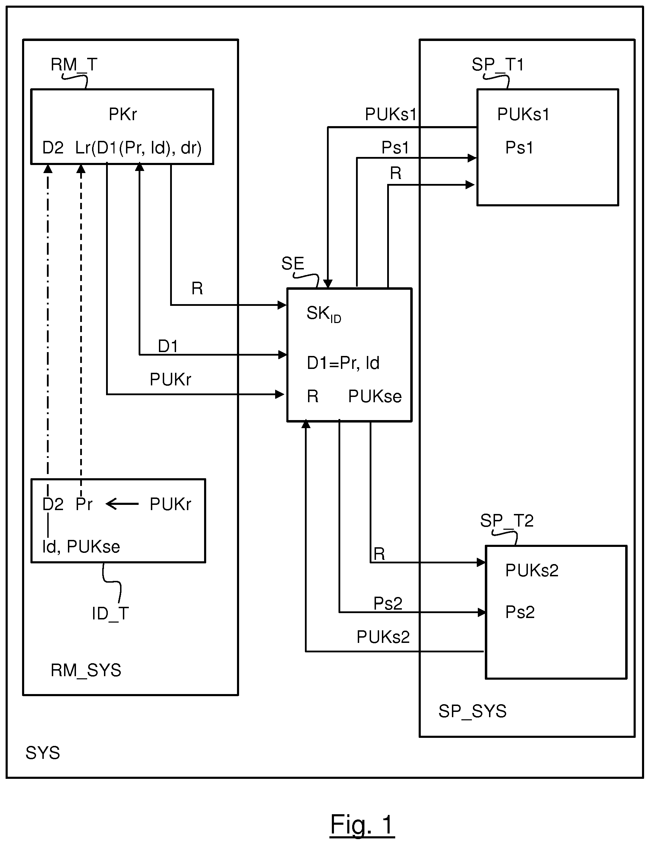

Said security management system SYS is illustrated in Fig. 1 in a non-limitative embodiment.

It comprises:
- A revocation management system RM_SYS which comprises:
   - a revocation management terminal RM_T ; and
   - an identity management terminal ID_T.
- a plurality of tokens SE ;
- a service provider system SP_SYS comprising at least one service provider terminal SP_T.

The plurality of tokens SE is adapted to communicate with the revocation terminal RM_T and with the service provider system SP_SYS through adapted secured communication links.

When a token SE is presented to a service provider terminal SP_T, said terminal needs to establish whether the token SE is revoked from it, or not. As will be described in details in the following, this information comes from a third entity with the role of "revocation status management" which is the revocation management terminal RM_T. In order to preserve privacy, the service provider terminal SP_T must not be able to identify the user or token SE or the revocation management terminal RM_T. In order to preserve privacy, the revocation management terminal RM_T must not be able to deduce the identity of the service provider terminal SP_T wanting the revocation information.

Firstly, the user presents the token SE to the revocation management terminal RM_T, which creates or updates at least one status attribute R in the token SE asserting that the token is revoked or is not revoked from a service provider terminal SP_T. The token may then, at a later time, in an unrelated interaction, be presented to the service provider terminal SP_T (verifier), which can check the assertion. The service provider terminal SP_T (the verifier) has the option of accepting the assertion or requesting that the token SE obtains a fresher one, by re-visiting revocation management terminal RM_T. Privacy is maintained as there is no direct link between the service provider terminal SP_T and the revocation management terminal RM_T.

The revocation management system RM_SYS, the tokens SE and the service provider system SP_SYS are described in detail in the following.

The functions which are illustrated in dotted-lines are optional.

### Revocation management system RM_SYS

### • Identity management terminal ID_T

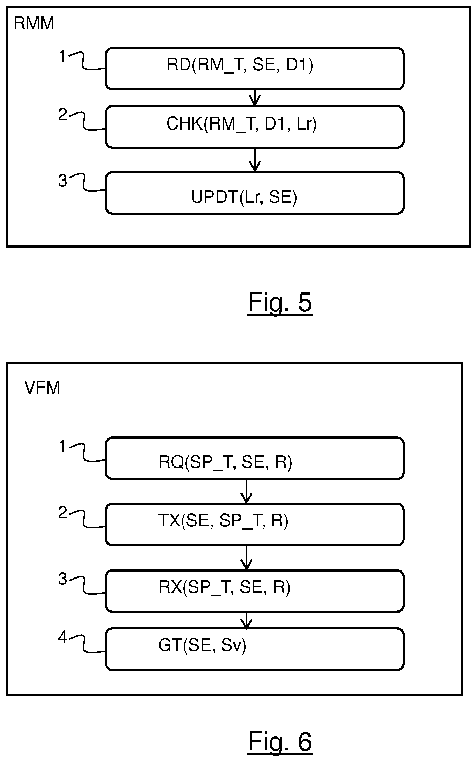

The identity management terminal ID_T illustrated in Fig.1 and Fig. 5 is adapted to:
- define an identifier Id for the token SE which will be able to be used within a service provider system SYS (illustrated DEF(SE, Id)) ;
- determine the tokens SE which are to be revoked from at least one service provider terminal SP_T of the service provider system SYS or determine the tokens SE which are not revoked from at least one service provider terminal SP_T of the service provider system SYS, that is to say, it determine the tokens SE which are valid (illustrated DEF(SE, Lr)).

An identifier Id is linked to the identity of the owner of the token SE. The identity comprises information such as in non-limitative examples the first name, last name and date of birth. An identifier Id is in a non-limitative example, the identity serial card number of the token SE.

A token SE is to be revoked when:
- a) it is used illegitimately (it has been stolen) ; or
- b) it is used inappropriately (the token's user doesn't respect the rules of conduct of a service provider for example) ; or
- c) it has been lost ; or
- d) it is no longer up-to-date.
- e) it is temporarily suspended.

In non-limitative examples, suspension reasons are because the user is leaving the country, is sent to prison, has not paid some fees to the identity management authority etc.

In the cases a), c) and e), the owner of the token SE informs the party which manages the identity management terminal ID_T that the token SE has to be revoked. In another case, a legal entity may make the request for revocation.

In the case b), the service provider terminal SP_T which offers the service Sv in which the token SE is used inappropriately informs the party which manages the identity management terminal ID_T that the token SE has to be revoked.

In the case d), the party which manages the identity management terminal ID_T knows himself that the token SE has to be revoked.

A token is therefore valid when it hasn't been revoked.

To inform the revocation management terminal RM_T that a token SE has to be revoked from such and such service provider terminal(s) SP_T of the service provider system SP_SYS, or that a token SE is valid for such and such service provider terminal(s) SP_T of the service provider system SP_SYS, there are different alternatives for the identity management terminal ID_T which are described hereinafter.

In a first non-limitative embodiment, the identity management terminal ID_T is adapted to transmit a revocation pseudonym Pr to said revocation management terminal RM_T (illustrated in dotted lines TX(ID_T, RM_T, Pr)).

The identity management terminal ID_T is therefore adapted to compute the revocation pseudonyms Pr associated to each token SE (which will be used with the service provider system SP_SYS) according to their identifier Id (illustrated in dotted lines COM(Id, Pr, SE)). A revocation pseudonym Pr is computed according to a public key PUKse of the token SE, the identity management terminal ID_T knowing the public key of all the tokens SE.

In a second non-limitative embodiment, the identity management terminal ID_T is adapted to transmit second data D2 representative of said token SE to said revocation management terminal RM_T (illustrated in alternating lines and dots TX(ID_T, RM_T, D2)). Said second data D2 are in a non-limitative example the identifier Id of the token SE itself or a public key PUKse of said token SE.

### • Revocation management terminal RM_T

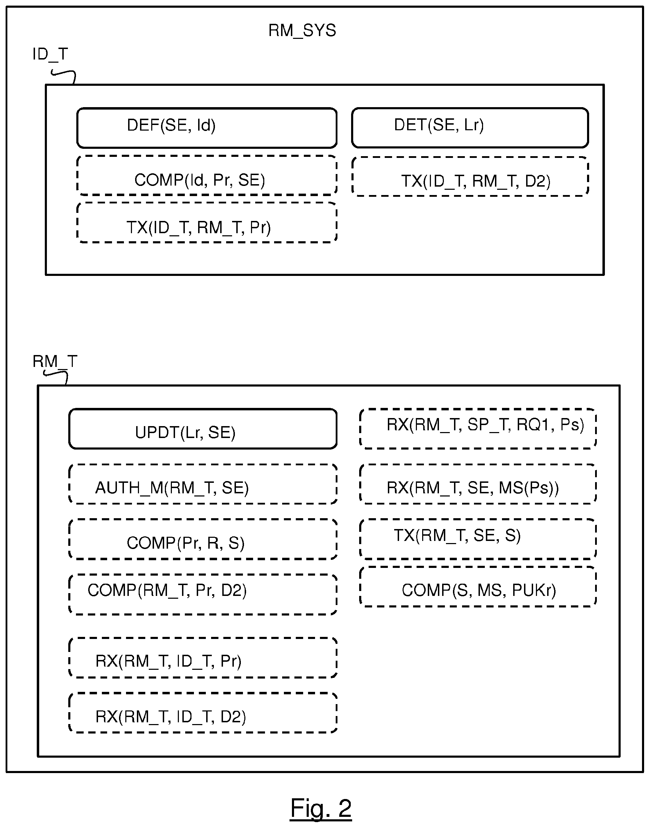

The revocation management terminal RM_T illustrated in Fig. 1 and Fig. 2 comprises a token status list Lr.

In a first non-limitative embodiment, said token status list Lr comprises first data D1 corresponding to the tokens SE which are revoked from at least one service provider terminal SP_T of the service provider system SP_SYS.

In a second non-limitative embodiment, said token status list Lr comprises first data D1 corresponding to the tokens SE which are not revoked from at least one service provider terminal SP_T of the service provider system SP_SYS, that is to say, the tokens which are valid for at least one service provider terminal SP_T.

When a token SE is to be included in said list Lr, the revocation management terminal RM_T is informed by the identity management terminal ID_T as explained before. Upon this information, the revocation management terminal RM_T is adapted to update its token status list Lr to include said token SE accordingly (illustrated UPDT(Lr, SE) in Fig. 2)).

In a first non-limitative embodiment, the first data D1 are the identifier Id of the token SE to be included in the list Lr.

In a second non-limitative embodiment, the first data D1 are a revocation pseudonym Pr. With this second non-limitative embodiment, the revocation management terminal RM_T can't identify the identity Id of the token SE as the revocation management terminal RM_T communicates with said token SE only via its revocation pseudonym Pr. The privacy of the token SE is therefore enhanced.

For this second non-limitative embodiment, in a first non-limitative variant, the revocation management terminal RM_T is adapted to receive the revocation pseudonym Pr of the token SE to be included in the token status list Lr, directly from the identity management terminal ID_T (illustrated RX(RM_T, ID_T , Pr) in Fig. 2)). In this variant, the revocation pseudonym Pr is computed with a revocation public key PUKr. In a second non-limitative variant, the revocation management terminal RM_T is adapted to receive from the identity management terminal ID_T second data D2 representative of said token SE to be included in the token status list Lr (illustrated RX(RM_T, ID_T , D2) in Fig. 2)), and to compute the revocation pseudonym Pr associated to said token SE according to said data D2 and a revocation private key PKr. (illustrated COMP(RM_T, Pr, D2)) in Fig. 2)). It is to be noted that said revocation private key corresponds to the revocation public key PUKr known by the identity management terminal ID_T.

The revocation management terminal RM_T will update the at least one status attribute R of a token SE according to said token status list Lr.

Indeed, the revocation management terminal RM_T is adapted to:
- read said first data D1 from a token SE ;
- check said first data against the token status list Lr.

Depending upon the nature of the status list Lr (if it comprises the revoked token or the non revoked token, if said first data D1 of said token SE is included within said list Lr, the revocation management terminal RM_T is adapted to update the at least one status attribute R in order to indicate respectively that:
- a) the token SE is revoked from at least one service provider terminal SP_T of said service provider system SP_SYS ; or
- b) the token is valid for at least one service provider terminal SP_T of said service provider system SP_SYS.

In a first non-limitative embodiment, the token SE comprises one status attribute R dedicated for each service-provider terminal SP_T.

In a second non-limitative embodiment, the token SE comprises a global status attribute R shared for every service provider terminal SP_T of the service provider system SP_SYS.

If said first data D1 is not included in said list Lr, the revocation management terminal RM_T is adapted to update the status attribute R in order to indicate respectively that:
- a) the token SE is valid : it has the rights to access to the services Sv provided by said at least said service provider terminal of the service provider system SP_SYS ;
- b) the token SE is revoked : it has no right to access to the services Sv provided by said at least one service provider terminal SP_T of the service provider system SP_SYS.

For example, the status attribute R is updated with the value 1 if the token SE is revoked, and with the value 0 if it valid.

In non-limitative embodiments, different parameters may be associated with said first data D1 of a token in the token status list Lr such as:
- a first parameter p1 indicating for which service provider terminal(s) the token SE is revoked/valid ;
- a second parameter p2 defining a date and time when the corresponding token SE has been revoked or defining the date and the time from which the corresponding token SE is valid.
- a third parameter p3 indicating if the revocation/validity is permanent or not.

In a non-limitative embodiment, the update by the revocation management terminal RM_T of the status attribute R according to the checking is performed upon request RQ1 of said service provider terminal SP_T if said status attribute R is not available or not up-to-date. Therefore, the revocation management terminal RM_T is adapted to receive such a request RQ1 from said service provider terminal SP_T (illustrated RX(RM_T, SP_T, RQ1, Ps)). Different variants of this embodiment are described hereinafter without the involvement of the end-user which is the user of the token SE (first and second variants) or with the involvement of the end-user (third and fourth variants).

In a first non-limitative variant, the service provider terminal SP_T redirects its request RQ1 to the revocation management terminal RM_T using a permanent redirection that is similar to a standard URL redirection. Then, said revocation management terminal RM_T reads the first data D1 of the token SE to start the verification in order to update the status attribute R. The permanent redirection doesn't contain any service provider pseudonym Ps or any information related to the original SP_T.

In order to keep the privacy of a token's identifier, in a non-limitative embodiment, the token SE is adapted to compute a service pseudonym Ps associated to each service provider terminal SP_T. A service provider pseudonym Ps will be described later in the description. Instead of using the token's identifier Id, said service pseudonym Ps is used.

In a second non-limitative variant, the service provider terminal SP_T SP uses a redirection service terminal which is an additional party in the security management system SYS (not illustrated):
- first, the SP_T uses a temporary redirection to the redirection service terminal (the token SE is now in connection with the redirection service terminal) ;
- secondly, the redirection service terminal uses a temporary redirection to the revocation management terminal RM_T. Said temporary redirection doesn't contain any service pseudonym Ps or any information related to the original SP_T (the token SE is now in connection with the revocation management terminal RM_T) ;
- thirdly, the revocation management terminal RM_T read the first data D1 of the token SE to start the verification in order to update the status attribute R ;
- fourthly, the revocation management terminal RM_T informs the redirection service terminal that the SP_T may recover the connection with the token SE.

In a third non-limitative variant, firstly, the SP_T displays/informs the user that the status attribute R of his token SE has to be updated and a connection with the revocation management terminal RM_T is necessary. Secondly, the user connects to the revocation management terminal RM_T in order to start the verification for updating the status attribute R. Thirdly, the user has to reconnect to the SP_T with his token SE so that the service provider terminal SP_T verifies the status attribute R.

In a fourth non-limitative variant, firstly, the SP_T displays/informs the user that the status attribute R has to be updated and that the user has to go (physically) to a specific office to perform the verification in order to update the status attribute R. Next, the user has to reconnect to the SP_T with his token SE so that the service provider terminal SP_T verifies the status attribute R.

With these four variants, the privacy is maintained as there is no direct link between the revocation management terminal RM_T and the service provider terminal SP_T.

In order to secure the communication with a token SE, in a non-limitative embodiment, the revocation management terminal RM_T is further adapted to perform a mutual authentication with said SE (illustrated AUTH_M(RM_T, SE)).

The mutual authentication is based on cryptographic keys in both the token SE and the revocation management terminal RM_T. The same cryptographic key may be used more than once, corresponding to a secret key SK_{ID} of the token SE, or not. It permits to establish a secure channel between said token SE and said revocation management terminal RM_T. It is to be noted that said mutual authentication is performed before the updating of the status attribute R of said token SE by said revocation management terminal RM_T.

It permits the revocation management terminal RM_T to know if the token SE is part of the service provider system SP_SYS or not. It permits the token SE to rely on the revocation management terminal RM_T. Hence, said mutual authentication contributes to the security of the whole secure management system SYS.

In a non-limitative embodiment, a General Authentication Procedure "GAP procedure" may be used for said mutual authentication. Such procedure will be explained later in the description.

In order to improve the reliability of the status attribute R, in a non-limitative embodiment, a transferable proof is used. Said transferable proof comprises a signature S with its corresponding message MS.

It permits a service provider terminal SP_T to prove that it respects the security policy of the service provider system SP_SYS and that it doesn't give access to stolen tokens SE for example.

Indeed, depending on their activities, service providers could have to prove to an external party (e.g. an auditor of the service provider activities) that they have indeed followed some established rules for risk management and detection of abnormal behavior. For example, some parameters and thresholds could be used to define "consumer profiles" based on service pseudonyms Ps, some specific activities could be identify to have "high" score (of risk) whereas others activities could be rated to low or medium score. All this information could be combined by the service provider to make the decision of requesting a replenishment of the status attribute R of a specific service pseudonym Ps.

Hence, in a non-limitative embodiment, the status attribute R is signed.

In a non-limitative variant, the revocation management terminal RM_T is adapted to compute a blind or partially blind signature S using a blind signature protocol. In non limitative examples, protocols such as U-prove or Idemix may be used.

The computation is performed according to a blinded message MS sent by the token SE.

In the case of a blind or partially blind signature S, said revocation management terminal RM_T is further adapted to:
- receive a blind message MS sent by the token SE (illustrated RX(RM_T, SE, M(Ps));
- sign said blind message MS with its revocation public key PUKr in order to obtain a scrambled message MS (illustrated COMP(S, MS, PUKr));
- transmit back said scrambled message MS to said token SE (illustrated TX(RM_T, SE, S).

In the case of a partially blind signature S, said revocation management terminal RM_T is further adapted to add public data Dp when signing said blinded message MS. Said public data Dp may be publicly acknowledged. In non-limitative examples, said public data Dp are a date (month, year), a time etc.

This non-limitative embodiment is described hereinafter in more details.

The message MS comprises the service pseudonym Ps (of the concerned service provider terminal SP_T) which is masked with a random. The service pseudonym Ps is therefore blinded in the message MS. The message MS which is therefore blinded is sent to the revocation management terminal RM_T. This latter signs this message MS and sends back to the token SE a blinded signature S which is the signed message MS or a partially blinded signature, which is the signed message MS plus some public data (added by said revocation management terminal RM_T). The token SE deciphers said partially blinded or blinded signature S to obtain a clear signature S2. Said signature S2 is sent to the concerned service provider terminal SP_T.

It is to be noted that due to the use of the blinded or partially signature S, neither the revocation management terminal RM_T, nor a third entity may link the token SE with the service provider pseudonym(s) Ps used. It is not possible for collusion between the revocation management terminal RM_T and the service provider terminal(s) to lessen a user's privacy.

In a non-limitative embodiment, the revocation management terminal RM_T signs said masked message MS only after successful verification of the following items by said revocation management terminal RM_T:
- proof of knowledge by the token SE of the service pseudonym Ps embedded in the blinded message MS (without revealing the pseudonym). This permits the service provider and external parties to rely on the data provided by the token SE without privacy disclosure.
- proof that the service embedded pseudonym Ps has the correct form, that is to say is of the form (g^{SP_sector})^{SKID}. Well-known proof of knowledge techniques such as in non-limitative examples proof of equality on committed values or using a randomizing of the value (g^{SP_sector})^{SKID} may be used. Said value (g^{SP_sector})^{SKID} is either revealed to the revocation management terminal RM_T or transmitted blinded, using a Pedersen commitment in a non-limitative example. It is to be noted that g is a cryptographic generator, SKID the secret key of the token SE, and SP_sector is an identifier shared by all service provider terminals of a certain service provider.

It is to be noted that techniques of proof of knowledge are used to prove to the signing entity that the requesting entity (here the token SE) has indeed performed the computation steps as it is expected to do.

At the end, the token SE receives a classical signature (that is verifiable with the public key of the Revocation management terminal RM_T) on a message that contains the service pseudonym Ps in clear text. During the exchange, the service pseudonym is not disclosed to the Revocation management terminal RM_T.

### Tokens SE

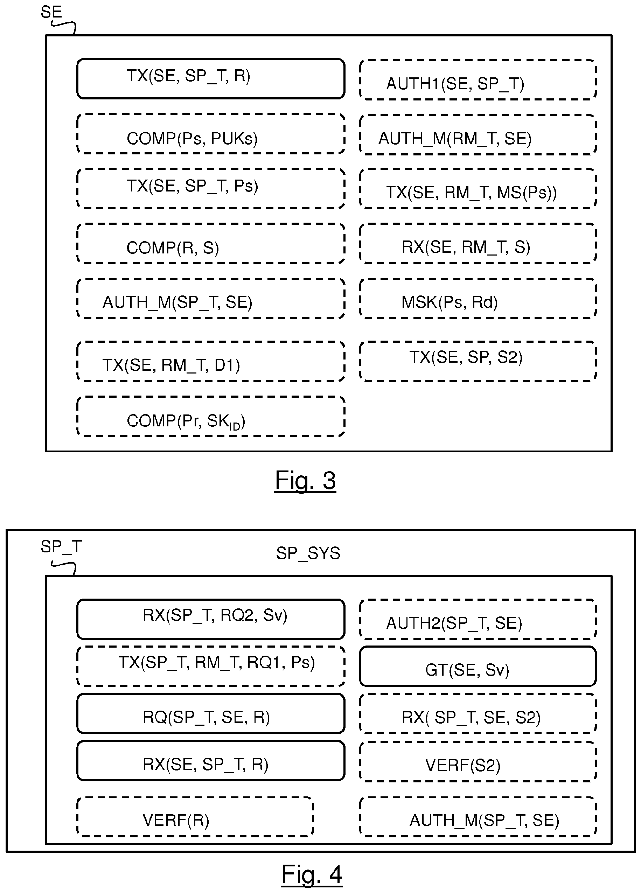

A token SE is illustrated in Fig. 1 and in Fig. 3. A token SE is a secure element. A secure element is a secured component which comprises a secured chip and may perform cryptographic functionalities and is adapted to store a secret key.

In a non-limitative embodiment, the token SE is a smart card. In non-limitative examples, the smart card is an Electronic Identity Card, is a health card, a driving license, a passport, a privacy card, a financial service card, an access card etc.

The token SE comprises:
- first data D1, which are an identifier Id of the token SE or a revocation pseudonym Pr ;
- a unique secret Key SK_{ID} ;
- at least one status attribute R.

These three elements are stored in a non-volatile memory of said token SE.

In a first non-limitative embodiment, said status attribute R indicates if a token SE is revoked from at least one service provider terminal SP_T of the service provider system SP_SYS.

In a second non-limitative embodiment, said status attribute R indicates if a token SE is not revoked from at least one service provider terminal SP_T, that is to say is valid for at least one service provider terminal SP_T of the service provider system SP_SYS.

The reasons for revocation (described before) of a token SE may result in revocation from all, some or one service provider terminal SP_T.

Therefore, in a first non-limitative embodiment, the token SE comprises a specific status attribute R for each service-provider terminal SP_T. In this case, the token SE comprises a plurality of status attribute R.

In a second non-limitative embodiment, the token SE comprises a global status attribute R for all the service provider terminals SP_T of the service provider system SP_SYS. In this case, the token SE comprises only one status attribute R. It means that all the SP_T have the right to read said global static attribute R.

In a third non-limitative embodiment, the token SE comprises one or a plurality of group static attributes R. A group of service provider terminals SP_T is associated with one group static attribute R. It means that this group of SP_T has the right to read said group static attribute R.

It is to be noted that one may have a combination of these three kinds of status attributes R.

A status attribute R comprises the following fields:
- a status d0 indicating if the token SE is revoked, or indicating if the token SE is valid ;
- a first data d1 indicating for which service provider terminal(s) SP_T of said service provider system SP_SYS the token SE is revoked/valid ;
- a second data d2 indicating the date and time of the revocation/validity ;
- a third data d3 indicating if the revocation/validity is permanent or not.

In a non-limitative embodiment, the ERA ("Enhanced Role Authentication") framework may be used to define the format of the status attribute R as well as mERA (Modular Enhanced Symmetric Role Authentication").

When the user of a token SE accesses a service Sv of a service provider terminal SP_T, the token SE presents its status attribute R (specific, group or global) to said service provider terminal SP_T in order for the later to check if it has the rights to access to the service Sv. Hence, the token SE itself informs a service provider terminal SP_T if it is revoked or if it is valid.

To this end, the token SE is adapted to transmit the status attribute R to a service provider terminal SP_T upon request of said service provider terminal SP_T (illustrated TX(SE, SP_T, R)).

The revocation attribute R must be up-to-date according to the token status list Lr of the revocation management terminal RM_T. Therefore, the token SE is further adapted to transmit its first data D1 (either the revocation pseudonym Pr or the identifier Id) to said revocation management terminal RM_T (illustrated TX(SE, RM_T, D1)). Said first data D1 are used by the revocation management terminal RM_T to check them against its token status list Lr and to update accordingly the status attribute R of said token SE as described before. There is no transmission of a blacklist over the security management system SYS, thus the revocation management terminal RM_T and the service provider terminals SP_T cannot collaborate to limit privacy.

In a non-limitative embodiment, the token SE computes the revocation pseudonym Pr according to its secret key SK_{ID} and to public data sent by the revocation management terminal RM_T (illustrated COMP(Pr, SK_{ID})). It is to be noted that said computation may be performed after the mutual authentication between said token SE and said revocation management terminal RM_T.

In order to keep the privacy of a token's identifier, in a non-limitative embodiment, the token SE is further adapted to compute a service pseudonym Ps (illustrated COMP(Ps, PUKs)) and to transmit said service pseudonym Ps to said service provider terminal SP_T (illustrated TX(SE, SP_T, Ps)) when a service Sv has been requested by the user of said token SE.

In a first non-limitative embodiment, there are as many service pseudonyms Ps for one token SE as there are connections to different service terminals SP_T.

In a second non-limitative embodiment, there is one service pseudonym Ps per group of service provider terminals SP_T. A group of service provider terminals SP_T may represent a sector which is a group of service providers. In a non-limitative examples, a sector may be "a plurality of banks", "a plurality of web-stores" etc. A sector may have one or a plurality of members.

In this second non-limitative embodiment, the same public key is used by the different service provider terminals of a group for requesting the service pseudonym computation by the token SE. The token SE would check in a certificate to verify that a SP_T is authorized to request the service pseudonym computation using that public key.

In the non-limitative example of Fig. 1, the secure element SE has:
- one service pseudonym Ps1 associated to a first service provider terminal SP_T1. The association is performed via the service public key PUKs1 of said first service provider terminal SP1 ; and
- one service pseudonym Ps2 associated to a second service provider terminal SP_T2. The association is performed via the service public key PUKs2 of said first service provider terminal SP2.

There is no possibility for the service provider terminals SP_T to exchange information about the tokens, as each token SE has a specific pseudonym Ps associated to a service provider terminal SP_T. The relation is therefore a one (token) to N (pseudonyms) relation when there are N service provider terminals to which the token SE connects for a service Sv.

In a non-limitative embodiment, a service pseudonym Ps computation is performed by the token SE on the fly, each time there is a request by the user of said token SE for a connection to a service Sv of a service provider terminal RM_T. A service pseudonym Ps is computed and transmitted to the relevant service provider terminal SP_T without registration in a memory of the token SE. It avoids overloading the memory of the token SE with the pseudonyms. It avoids managing the token memory according to the number of service provider terminals SP_T which are within the service provider system SP_SYS. Said number may moreover change over time.

It is to be noted that the token SE is seen by the service provider terminal SP_T with a unique service pseudonym Ps, even if dynamic computation of a service pseudonym Ps occurred at each connection to said service provider terminal.

In a non limitative embodiment, said service pseudonym Ps is computed according to a service public key PUKs of said service provider terminal SP_T and according to the restricted identification protocol (RI protocol).

Restricted Identification may be used to generate a token-specific service pseudonym Ps for a certain terminal sector SP_sector.

This allows an (authenticated) service provider terminal to recognize a token SE based on the specific service pseudonym previously received from the token SE without reading out any private data. Furthermore, it is computationally impossible to link service pseudonyms Ps across terminal-sectors SP_sector.

Hence, the token SE receives from the service provider a service public key PUKs in the form of g^{SP_sector}. According to the RI protocol, the service pseudonym Ps is computed using a hash function as following: Ps = hash((g^{SP_sector}) ^{SKID}).

It is to be noted that in a first non-limitative variant, the service public key PUKs may be received during the authentication of the service provider terminal SP_T within the certificate C provided for the authentication, said certificate C providing also the authentication public key. In this case, the token SE may check the authenticity of the parameter g^{SP_sector} using the certificate received for the authentication of the service provider terminal SP_T. In a second non-limitative variant, the service public key PUKs may be received when the RI protocol is executed, after the secured channel is established between the token SE and the service provider terminal SP_T.

It is to be noted that in some cases the user may access to a service Sv of a service provider terminal SP_T without the need of giving the identifier Id of his token SE; there is no need to compute a service pseudonym Ps as the service provider terminal SP_T doesn't need any token identifier Id inputs for its service Sv.

In order to avoid a fake service provider terminal SP retrieving the identifier or the service pseudonym Ps of a token SE, in a non-limitative embodiment, the token SE is adapted to perform an authentication of the service provider terminal SP_T to which the user of said token wants to access to (illustrated AUTH1(SE, SP_T)). Said authentication is performed after a request for a service Sv by the user of the token SE.

In order to secure the communication with a service provider terminal SP_T, in a non-limitative embodiment, the token SE is further adapted to perform a mutual authentication with said service provider terminal SP_T (illustrated AUTH_M(SP_T, SE)).

Said mutual authentication is performed after a request for a service Sv by the user of the token SE.

According to said mutual authentication, a secured communication link is established between said token SE and said service provider terminal SP_T and this latter is adapted to transmit via said secured communication link its service public key PUKs to the token SE. After successful mutual authentication, the token SE and the service provider terminal SP_T trust each other, the token SE acknowledges that said service public key PUKs is authentic and vice-versa.

After this mutual authentication, a service pseudonym Ps of the token SE may be computed (using said service public key PUKs).

In a non-limitative example, the mutual authentication is performed according to a "General Authentication Procedure" also called GAP scheme well-known by the man skilled in the art. According to this GAP scheme:
- the token SE comprises a root secret key and an associated root certificate, said root secret key and said root certificate being known by all the token SE of a same group ; and
- the service provider terminal SP_T comprises a specific key and an associated specific certificate.

The mutual authentication is performed by exchanging a chain of root certificates and of specific certificates based on said root key and on said specific key.

In another non-limitative embodiment, a mERA cryptographic technique may be used to perform mutual authentication.

When a transferable proof, is used, in a non-limitative variant, the signature S is computed by the token SE itself and according to the status attribute R (illustrated COMP(S, R)).

The token SE uses its private key SK_{ID} and the public key PUKs of the concerned service provider terminal SP_T to sign the status attribute R. The service provider terminal SP_T will verify said signature S with its public key PUKs and the identifier Id of the token SE or with its public key PUKs and the service pseudonym Ps, in the case a service pseudonym Ps is used by said token SE for the signature S. It is to be noted that the computation of a signature S may be performed upon decision of the token itself SE.

When a transferable proof is used, as described before, in another non-limitative variant when a blinded or partially blinded signature S is used, the token SE is further adapted to:
- mask a service pseudonym Ps with a random Rd and encapsulate it in a message MS (illustrated MSK(Ps, Rd));
- send said blind message MS to the revocation management terminal RM_T (illustrated TX(SE, RM_T , MS(Ps));
- receive a scrambled message MS, which is the blinded or partially blinded signature S from said revocation management terminal (illustrated RX(SE, RM_T, S);
- decipher the partially blinded or blinded signature S to obtain a clear signature S2, and send said signature S2 to the concerned service provider terminal SP_T (illustrated TX(SE, SP_T, S2)).

### Service provider systemSP_SYS

The service provider system SP_SYS illustrated in Fig. 4, is a system which provides one or a plurality of services Sv by means of one or a plurality of service provider terminal SP_T to the plurality of tokens SE which have been declared within said system SP_SYS by the identity management terminal ID_T.

In a non-limitative example, the service provider system SP_SYS is a state government which uses a plurality of service provider terminals and the service provider terminals SP_T provide the following services:
- social welfare services ;
- legal rights services ;
- employment services etc ;
- banking services etc.

### • Service provider terminal SP_T

A service provider terminal SP_T illustrated in Fig. 4 is adapted to verify if a token SE is revoked from it, or not, said verification being based on the status attribute R of said token SE.

The service provider terminal SP_T is adapted to:
- receive from the user of said token SE a request for access RQ2 to one of its service Sv (illustrated RX(SP_T, RQ2, Sv)) ;
- request to said token SE the status attribute R after one of its service Sv has been requested by the user of said token SE (illustrated RQ(SP_T, SE, R));
- receive said status attribute R from said token SE (illustrated RX(SE, SP_T, R));
- verify if said token SE is revoked or not from it, said verification being based on the status attribute R of said token SE (illustrated VERF(R)) ;
- grant access to said service Sv if said token SE is not revoked from it (the value of the revocation attribute R is 0 for example) (illustrated GRT(SE, Sv)).

To verify if the token SE is revoked from it, or not, the SP_T checks the status attribute R (specific and/or group and/or global) it is entitled to read.

It is to be noted that when using a group status attribute R, or a global status attribute R, if the service provider terminal SP_T sees that the token SE is revoked/valid for all the service provider terminals SP_T of said group or of the service provider system SP_SYS, it means of course that the token SE is revoked/valid of itself.

In a non-limitative embodiment, a service provider terminal SP_T is adapted to request the status attribute R from said token SE using the associated service pseudonym Ps of said token SE, said service pseudonym PS being based on its own service public key PUKs (illustrated RQ(SP_T, Ps, R)). It receives said status attribute R from said service pseudonym Ps associated to said token SE (illustrated RX(Ps, SP_T, R)).

As described before, the service provider terminal SP_T is adapted to send a request RQ1 for updating the status attribute R by the revocation management terminal RM_T if said status attribute R is not available or not up-to-date (illustrated TX(SP_T, RM_T, RQ1, Ps)).

In order to avoid a user using a fake token SE (a token which is not admitted within the service provider system SP_SYS) to access to the services Sv of the service provider terminal SP_T, in a non-limitative embodiment, the service provider terminal SP_T is further adapted to perform an authentication of the token SE, said authentication being performed after a request for a service Sv by the user of said token SE (illustrated AUTH2(SP_T, SE)).

In a non-limitative embodiment, the service provider terminal SP_T is further adapted to perform a mutual authentication with a token SE (as described before), said mutual authentication being performed after a request for a service Sv by the user of said token SE (illustrated AUTH_M(SP_T, SE)).

As described before, when a blinded or partially blinded signature S is used, the service provider terminal SP_T is further adapted to:
- receive the signature S2 from the token SE (illustrated RX(SP_T, SE, S2)) ; and
- verify said signature S2 (illustrated VERF(S2)).

Hence, the revocation management system RM_SYS which has been described is adapted to carry out a revocation management method RMM for revoking or not revoking (that is to say for revoking or for validating) a token SE from at least one service provider terminal SP_T of the service provider system SP_SYS, said token SE comprising a status attribute R.

And, a service provider terminal SP_T of the service provider system SP_SYS which has been described is adapted to carry out a verification management method VFM for verifying if a token SE is revoked from it, or , said verification being based on the status attribute R of said token SE.

Both methods are described hereinafter with reference to Fig. 5 to 8.

### Revocation management method RMM.

The revocation management method will be described hereinafter with reference to Fig. 5, 7 and 8.

Said method RMM comprises:
- the reading of first data D1 from a token SE by means of a revocation management terminal RM_T, said revocation management terminal RM_T comprising a token status list Lr which comprises first data D1 corresponding to the tokens SE which are revoked or corresponding to the tokens SE which are not revoked from it (illustrated in Fig. 5 RD(RM_T, SE, D1)) ;
- the checking of said first data D1 against said token status list Lr by means of said revocation management terminal RM_T (illustrated (CHK(RM_T, D1, Lr)) ;
- the update of the status attribute R of said token SE according to said checking by means of said revocation management terminal RM_T (illustrated (UPDT(Lr, SE)).

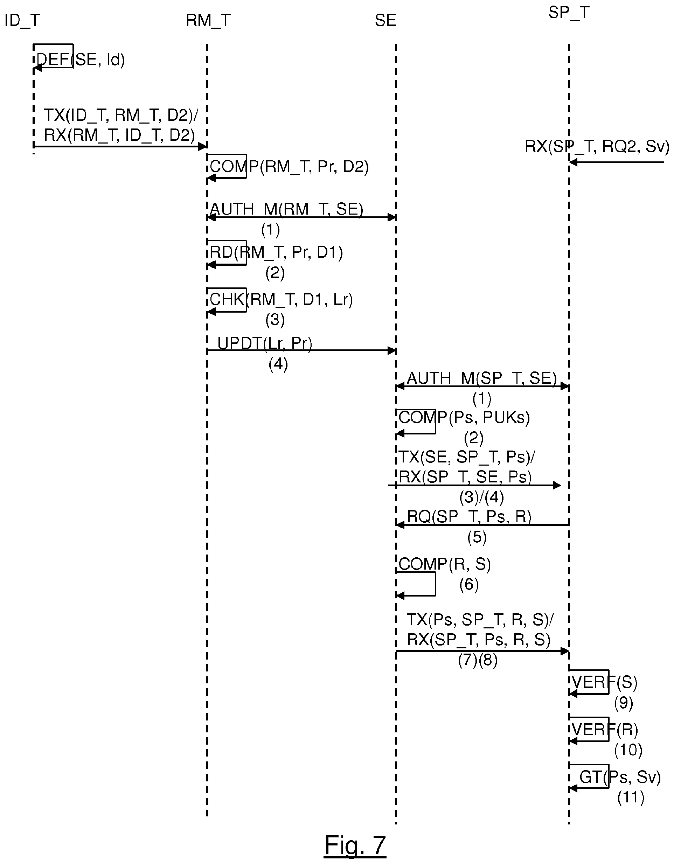

Fig. 7 illustrates a firs non-limitative embodiment of the method RMM wherein said method RMM computes the revocation pseudonym Pr according to second data D2 received from the identity management terminal ID_T (illustrated COMP(RM_T, D2, Pr, PUKr)).

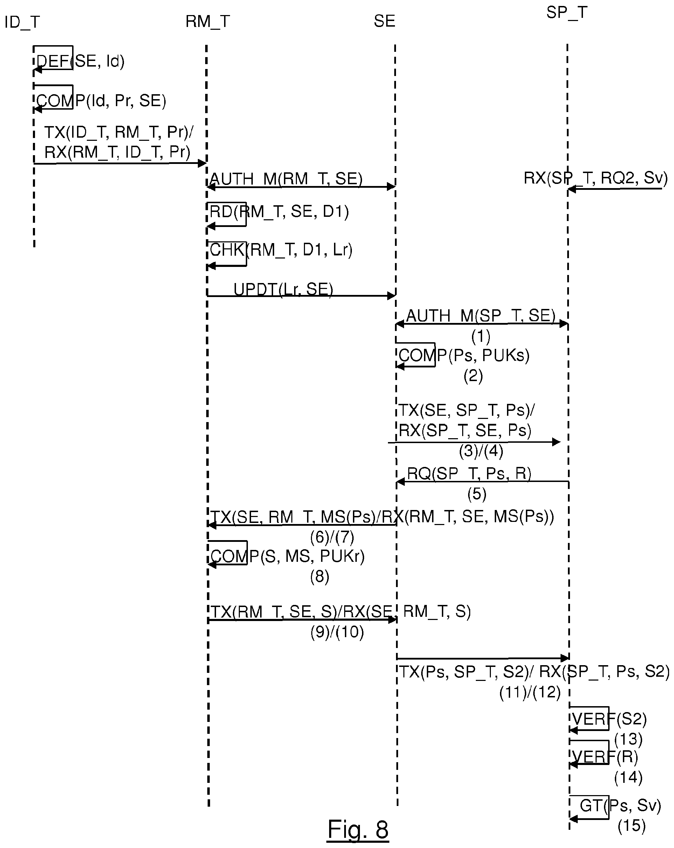

Fig. 8 illustrates a second non-limitative embodiment of the method RMM wherein said method receives the revocation pseudonym Pr from said identity management terminal ID_T (illustrated RX(RM_T, ID_T, Pr)), said identity management terminal ID_T performing the computation of said revocation pseudonym Pr.

The sequence diagrams of Fig. 7 and of Fig. 8 illustrate the method RMM wherein the method RMM further comprises:
- the computation of a revocation pseudonym Pr for a token SE by means of the revocation management terminal RM_T (illustrated COMP(RM_T, D2, Pr, PUKr));
- the mutual authentication between the revocation management terminal RM_T and a token SE (illustrated AUTH_M(RM_T, SE)).

**In a first step 1)**, the revocation management terminal RM_T performs a mutual authentication with the token SE to be revoked or to be validated for the service provider terminal SP_T.

**In a second step 2)**, when the authentication is established, the revocation management terminal RM_T reads the first data D1 from the token SE.

**In a third step 3)**, the revocation management terminal RM_T checks said first data D1 against said token status list Lr.

**In a fourth step 4)**, the revocation management terminal RM_T updates the status attribute R of said token SE according to said checking.

Hence, the status attribute R is updated according to
- the validity/revocability; and
- the concerned service provider terminal(s) SP_T;
- optionally, the date and time of said validity/revocability; and
- optionally, the temporality of said validity/revocability.

### Verification management method VFM.

The verification management method will be described hereinafter with reference to Fig. 6, 7 and 8.

Said method VFM is triggered when a user of the token SE asks access to a service Sv of the service terminal provider SP_T (illustrated in Fig. 7 and Fig. 8 RX(SP_T, RQ2, Sv)).

Said verification management method VFM is for verifying if a token SE is revoked or not from at least one service provider terminal SP_T of said the service provider system SP_SYS, said verification being based on the at least one status attribute R of said token SE, and being performed by means of a service provider terminal SP_T of said service provider system SP_SYS.

Said method VFM comprises:
- the request by said service provider terminal SP_T to said token SE for the at least one status attribute R after one of its service Sv has been requested by the user of said token SE (illustrated in Fig. 6 RQ(SP_T, SE, R));
- the transmission by said token SE of the at least one status attribute R to said service provider terminal SP_T (illustrated in Fig. 6 TX(SE, SP_T, R));
- the reception of said at least one status attribute R by said service provider terminal SP_T (illustrated RX(SP_T, SE, R)) ;
- according to said at least one status attribute R, the verification by said service provider terminal SP_T if said token SE is revoked from it, or not (illustrated in Fig. 6 VERF(R)); and
- the grant of access to said service Sv by said service provider terminal SP_T if said token SE is not revoked (illustrated in Fig. 6 GT(SE, Sv)).

Fig. 7 illustrates the verification management method VFM according to a first non-limitative embodiment. According to said embodiment, the method VFM further comprises:
- the mutual authentication between the service provider terminal SP_T and a token SE;
- the computation by the token SE of a service pseudonym Ps and the transmission of said service pseudonym Ps to said service provider terminal SP_T when a service Sv has been requested by the user of said token SE, said service pseudonym Ps being based on a service public key PUKs of said service provider terminal SP_T ;
- the request by the service provider terminal SP_T of the status attribute R from the said token SE using said associated service pseudonym Ps of said token SE ;
- the computation of a signature S by means of a token SE ;
- the request of a signature S by the service provider terminal SP_T ;
- the verification by said service provider terminal SP_T of said signature S.

It is to be noted that as the service pseudonym Ps is used, this reference is used in the different steps illustrated instead of the reference SE.

Hence, **in** a **first step 1)**, there is a mutual authentication between the token SE and the service provider terminal SP_T to which the user of the token wants to access to a service Sv;

**In a second step 2)**, the token SE computes the service pseudonym Ps according to the service provider terminal SP_T public key PUKs and transmits **in a third step 3)** said service pseudonym Ps to said service provider terminal SP_T which receives it (**step 4**);

**In a fifth step 5)**, the service provider terminal SP_T requests the status attribute R of said token SE using said service pseudonym Ps, and the service provider terminal SP_T requests the signature S for the status attribute R.

**In a sixth step 6)**, the token SE computes the signature S according to its status attribute R and sends **in a seventh step 7)** the status attribute R with the signature S to the service provider terminal SP_T by means of a certificate C. The service provider terminal SP_T receives said certificate C **(step 8)**.

**In a ninth step 9)**, the service provider terminal SP_T verifies the signature S.

**In an tenth step 10)**, if said signature S is right, the service provider terminal SP_T retrieves the status attribute R from said associated certificate C and verifies if said token SE is revoked from it, or not.

**In an eleventh step 11)**, the service provider terminal SP_T grants access to said service Sv to the user of said token SE if said token SE is not revoked.

Otherwise, the service provider terminal SP_T denies access to said service Sv (not illustrated).

Fig. 8 illustrates the verification management method VFM according to a second non-limitative embodiment. Said embodiment is different from the first embodiment in that the computation of the signature S is performed by means of the revocation management terminal RM_T, and not any more by means of the token SE.

Hence, **in a first step 1)**, there is a mutual authentication between the token SE and the service provider terminal SP_T to which the user of the token wants to access to a service Sv; **In a second step 2)**, the token SE computes the service pseudonym Ps according to the service provider terminal SP_T public key PUKs and transmits **in a third step 3)** said service pseudonym Ps to said service provider terminal SP_T which receives it **(step 4)**;

**In a fifth step 5)**, the service provider terminal SP_T requests the status attribute R of said token SE using said service pseudonym Ps, and the service provider terminal SP_T requests the signature S for the status attribute R.

**In a sixth step 6)**, the token SE sends a blinded message MS comprising a blinded service pseudonym Ps (the service pseudonym Ps which is masked with a random).

**In a seventh step 7)**, the revocation management terminal RM_T receives the blinded message MS, signed it with its revocation public key PUKr (**step 8**) to obtain a signature S and sends it back to the token SE (**step 9**) which receives it (**step 10**).

**In a tenth step 11)** the token SE decipher the signature S with said revocation public key PUKr to obtain a clear signature S2 and sends the status attribute R with the signature S2 to the service provider terminal SP_T by means of a certificate C. Said service provider terminal SP_T receives said certificate (**step 12**). **In a thirteenth step 13)**, the service provider terminal SP_T verifies the signature S2.

**In a fourteenth step 14)**, if said signature S2 is valid, the service provider terminal SP_T retrieves the status attribute R from said associated certificate C and verifies if said token SE is revoked from it, or not.

**In a fifteenth step 15)**, the service provider terminal SP_T grants access to said service Sv to the user of said token SE if said token SE is not revoked.

Otherwise, the service provider terminal SP_T denies access to said service Sv (not illustrated).

It is to be noted that the revocation management method RMM and the verification management method VFM above-described are performed independently unless the service provider terminal SP_T asks for the update of the status attribute R by the revocation management terminal RM_T.

It is to be understood that the present invention is not limited to the aforementioned embodiments.

Hence, while using a transferable proof, in order to strengthen the token's non-revocation assertion for example, in another non-limitative embodiment, the service provider terminal SP_T may passes a random number to the token SE. Said random number will be encapsulated in the transferable proof, and at the end be verified by said service provider terminal SP_T.

Hence, in non-limitative embodiments, the status attribute R may comprises other fields such as:
- a validity period of the status attribute R ; and/or
- the date of the update of the status attribute R ; and/or
- when (date and/or time) the signature S is issued by the token SE.

With one of the last two fields, the token SE is adapted to ask on its own the revocation management terminal RM_T for an update of its status attribute(s) R. In this case, a reference date (date and/or time of the day) is to be known by the token SE. Either the token SE has an internal clock, or the token SE receives the reference date from an external authority.

Hence, some embodiments of the invention may comprise one or a plurality of the following advantages:
- it is easy to implement;
- it solves the problem of how to revoke a token while still maintaining the privacy of its owner;
- the users' activities with different parties, such as service providers, may not be linked together anymore (non-linkability) and their usage may not be traced anymore (non-traceability): their anonymity is maintained;
- it doesn't require to manage as many lists (black or white) as there are service providers ;it avoids the revocation management terminal RM_T to be a central entity with the capability of tracking consumers based on pseudonyms;
- it permits a token to perform pseudonymous authentication ;
- It avoids unique citizen identifiers to be used;
- It permits lost or stolen token to be revoked from one or a plurality of service provider terminals of the service provider system ;
- It provides a less cumbersome way for a service provider terminal SP_T to determine if a token is revoked or not as it doesn't need to check against a black list or white list containing all the tokens from the service provider system.

## Claims

1. Method for managing revocation status of a token (SE) while protecting the privacy of the token's user, wherein the revocation status of the token is managed through a revocation management system (RM SYS), wherein the revocation management system (RM_SYS) is configured to create or update at least one status attribute (R) stored in the token, said at least one status attribute (R) comprising a value indicating if the token (SE) is revoked or not from at least one service provider terminal (SP_T) of a service provider system (SYS), wherein;
a service provider terminal (SP_T) is adapted to:
- request from said token (SE) the at least one status attribute (R) after one of its services (Sv) has been requested by the user of said token (SE) ;
said token (SE) being adapted to :
- transmit the value of the status attribute (R) to the service provider terminal (SP_T) upon request of said service provider terminal (SP_T);
the service provider terminal (SP_T) is further adapted to :
- verify if said token (SE) is revoked or not, said verification being based on the value of said one status attribute (R) received from said token (SE).
- grant access to said service (Sv) if said the value is not a revocation value.

2. Method according to the previous claim, wherein said revocation management system (RM_SYS) comprises a revocation management terminal (RM_T), said revocation management terminal (RM_T) comprising a token status list (Lr) which comprises first data (D1) corresponding to the tokens (SE) which are revoked or corresponding to the tokens (SE) which are not revoked, and said revocation management terminal (RM_T) being adapted to :
- read said first data (D1) from a token (SE) ;
- check said first data (D1) against the token status list (Lr) ;
- update the at least one status attribute (R) of said token (SE) according to said checking.

3. Method according to according to the previous claims, wherein the first data (D1) are a revocation pseudonym (Pr) or an identifier (Id) of the token (SE).

4. Method according to any one of the previous claims, wherein the update of the at least one status attribute (R) of said token (SE) is performed by the revocation management terminal (RM_T) upon request of said service provider terminal (SP_T) if said at least one status attribute (R) is not available or not up-to-date.

5. Method according to any one of the previous claims, wherein :
- the token (SE) is further adapted to compute a service pseudonym (Ps) and to transmit said service pseudonym (Ps) to said service provider terminal (SP_T) when a service (Sv) has been requested by the user of said token (SE), said service pseudonym (Ps) being based on a service public key (PUKs) of said service provider terminal (SP_T) ;
- the service provider terminal (SP_T) requests the at least one status attribute (R) from the said token (SE) using an associated service pseudonym (Ps) of said token (SE).

6. Method according to any one of the previous claims 2 to 5, wherein :
- said revocation management system (RM_SYS) further comprises an identity management terminal (ID_T) adapted to :
- define an identifier (Id) for a token (SE) ;
- compute the revocation pseudonym (Pr) associated to a token (SE) according to said identifier (Id) ;
- if said token (SE) is to be included in the token status list (Lr), transmit said revocation pseudonym (Pr) associated to said token (SE) to said revocation management terminal (RM_T) ;
- said revocation management terminal (RM_T) is further adapted to update said token status list (Lr) with said revocation pseudonym (Pr).

7. Method according to any one of the previous claims 2 to 5, wherein :
- said revocation management system (RM_SYS) further comprises an identity management terminal (ID_T) adapted to :
- define an identifier (Id) for a token (SE) ;
- if said token (SE) is to be included in the token status list (Lr), transmit second data (D2) representative of said token (SE) to said revocation management terminal (RM_T) ; and
- said revocation management terminal (RM_T) is further adapted to :
- receive said second data (D2) from said identity management terminal (ID_T) ;
- compute the revocation pseudonym (Pr) associated with said token (SE) according to said second data (D2) and to a revocation public key (PUKr) ; and
- update said token status list (Lr) with said revocation pseudonym (Pr).

8. Method according to any one of the previous claims, wherein a token (SE) is further adapted to perform an authentication of a service provider terminal (SP_T).

9. Method according to any one of the previous claims, wherein a service provider terminal (SP_T) is further adapted to perform an authentication of a token (SE).

10. Method according to any one of the previous claims 1 to 8, wherein said revocation management terminal (RM_T) and a token (SE) are further adapted to perform a mutual authentication.

11. Method according to any one of the previous claims, wherein said at least one status attribute (R) is signed with a signature (S).

12. Method according to the previous claims, wherein said signature (S) is computed by the token (S) according to the at least one status attribute (R).

13. Method according to the previous claim 11, wherein said signature (S) is computed by the revocation management terminal (RM_T) according to a blinded or partially blinded message (M) sent by said token (SE).

14. Method according to any one of the previous claims 11 to 13, wherein said signature (S) is computed :
- upon request of the service provider terminal (SP_T) ;
- upon decision of the token (SE).

15. Revocation management system (RM_SYS) for use in the method according to any previous claims, the revocation management system (RM_SYS) being configured to create or update at least one status attribute (R) in the token and a value of said one status attribute (R) indicating if the token (SE) is revoked or not from at least one service provider terminal of a service provider system (SP_T).

16. Service provider system (SP_SYS) for use in the method according to any previous claims 1 to 14, the service provider system (SP_SYS) comprising at least one service provider terminal (SP_T), said service provider terminal (SP_T) being adapted to verify if a token (SE) is revoked from it, or not, said verification being based on a value of, said at least one status attribute (R) indicating if said token (SE) is revoked or not from at least one service provider terminal (SP_T) of the service provider system (SP_SYS).

17. Verification management method (VFM) for verifying if a token (SE) is revoked or not from at least one service provider terminal (SP_T) of a service provider system (SP_SYS) according to claim 16, said verification being based on at least a value of one status attribute (R) of said token (SE) and being performed by means of a service provider terminal (SP_T) of said service provider system (SP_SYS).

18. Verification management method (VFM) according to claim 17, wherein said verification management method further comprises :
- the request by said service provider terminal (SP_T) to said token (SE ) for the at least one status attribute (R) after one of its service (Sv) has been requested by the user of said token (SE) ;
- the transmission by said token (SE) of the at least one status attribute (R) to said service provider terminal (SP_T) ;
- according to said at least one status attribute (R), the verification by said service provider terminal (SP_T) if said token (SE) is revoked from it, or not ; and
- the grant of access to said service (Sv) by said service provider terminal (SP_T) if said token (SE) is not revoked.

19. Security management system (SYS) comprising a plurality of tokens (SE), a revocation management system (RM_SYS) according to claim 15 and a service provider system (SP_SYS) according to claim 16 comprising at least one service provider terminal (SP_T), wherein the revocation status of the token is verified by the service provider terminal through the revocation management system (RM_SYS).

## Patentansprüche

1. Verfahren zum Verwalten des Widerrufstatus eines Tokens (SE), während die Privatsphäre des Benutzers des Tokens geschützt wird, wobei der Widerrufstatus des Tokens durch ein Widerrufverwaltungssystem (RM_SYS) verwaltet wird, wobei das Widerrufverwaltungssystem (RM_SYS) konfiguriert ist, um mindestens ein Statusattribut (R) zu erstellen oder zu aktualisieren, das in dem Token gespeichert ist, das mindestens eine Statusattribut (R) umfassend einen Wert, der angibt, ob das Token (SE) von mindestens einem Dienstanbieteranschluss (SP_T) eines Dienstanbietersystems (SYS) widerrufen wird oder nicht, wobei;
ein Dienstanbieteranschluss (SP_T) angepasst ist zum:
- Anfordern von dem Token (SE) des mindestens einen Statusattributs (R) nachdem einer seiner Dienste (Sv) durch den Benutzer des Tokens (SE) angefordert wurde;
wobei das Token (SE) angepasst ist zum:
- Übertragen des Werts des Statusattributs (R) an den Dienstanbieteranschluss (SP_T) auf Anforderung des Dienstanbieteranschlusses (SP_T);
wobei der Dienstanbieteranschluss (SP_T) ferner angepasst ist zum:
- Überprüfen, ob der Token (SE) widerrufen wird oder nicht, wobei die Verifizierung auf dem Wert des einen Statusattributs (R) basiert, das durch das Token (SE) empfangen wird.
- Erteilen von Zugriff auf den Dienst (Sv), falls der Wert kein Widerrufwert ist.

2. Verfahren nach dem vorstehenden Anspruch, wobei das Widerrufverwaltungssystem (RM_SYS) einen Widerrufverwaltungsanschluss (RM_T) umfasst, der Widerrufverwaltungsanschluss (RM_T) umfassend eine Tokenstatusliste (Lr), die erste Daten (D1) umfasst, die den Token (SE) entsprechen, die widerrufen sind, oder die den Token (SE) entsprechen, die nicht widerrufen sind, und der Widerrufverwaltungsanschluss (RM_T) angepasst ist zum:
- Lesen der ersten Daten (D1) von einem Token (SE);
- Überprüfen der ersten Daten (D1) gegen die Tokenstatusliste (Lr);
- Aktualisieren des mindestens einen Statusattributs (R) des Tokens (SE) gemäß dem Überprüfen.

3. Verfahren nach den vorstehenden Ansprüchen, wobei die ersten Daten (DI) ein Widerrufpseudonym (Pr) oder eine Kennung (Id) des Tokens (SE) sind.

4. Verfahren nach einem der vorstehenden Ansprüche, wobei die Aktualisierung des mindestens einen Statusattributs (R) des Tokens (SE) durch den Widerrufverwaltungsanschluss (RM_T) auf Anforderung des Dienstanbieteranschlusses (SP_T) durchgeführt wird, falls das mindestens eine Statusattribut (R) nicht verfügbar oder nicht aktuell ist.

5. Verfahren nach einem der vorstehenden Ansprüche, wobei:
- das Token (SE) ferner angepasst ist, um ein Dienstpseudonym (Ps) zu berechnen und um das Dienstpseudonym (Ps) an den Dienstanbieteranschluss (SP_T) zu übertragen, wenn ein Dienst (Sv) durch den Benutzer des Tokens (SE) angefordert wurde, wobei das Dienstpseudonym (Ps) auf einem öffentlichen Dienstschlüssel (PUKs) des Dienstanbieteranschlusses (SP_T) basiert;
- der Dienstanbieteranschluss (SP_T) das mindestens eine Statusattribut (R) von dem Token (SE) unter Verwendung eines zugehörigen Dienstpseudonyms (Ps) des Tokens (SE) anfordert.

6. Verfahren nach einem der vorstehenden Ansprüche 2 bis 5, wobei:
- das Widerrufverwaltungssystem (RM_SYS) ferner einen Identitätsverwaltungsanschluss (ID-T) umfasst, der angepasst ist zum:
- Definieren einer Kennung (Id) für ein Token (SE);
- Berechnen des Widerrufpseudonyms (Pr), das einem Token (SE) zugeordnet ist, gemäß der Kennung (Id);
- falls das Token (SE) in der Tokenstatusliste (Lr) eingeschlossen sein soll, Übertragen des Widerrufpseudonyms (Pr), das dem Token (SE) zugeordnet ist, an den Widerrufverwaltungsanschluss (RM_T);
- der Widerrufverwaltungsanschluss (RM_T) ferner angepasst ist, um die Tokenstatusliste (Lr) mit dem Widerrufpseudonym (Pr) zu aktualisieren.

7. Verfahren nach einem der vorstehenden Ansprüche 2 bis 5, wobei:
- das Widerrufverwaltungssystem (RM_SYS) ferner einen Identitätsverwaltungsanschluss (ID_T) umfasst, der angepasst ist zum:
- Definieren einer Kennung (Id) für ein Token (SE);
- falls das Token (SE) in der Tokenstatusliste (Lr) eingeschlossen sein soll, Übertragen zweiter Daten (D2), die für das Token (SE) repräsentativ sind, an den Widerrufverwaltungsanschluss (RM_T); und
- der Widerrufverwaltungsanschluss (RM_T) ferner angepasst ist zum:
- Empfangen der zweiten Daten (D2) von dem Identitätsverwaltungsanschluss (ID_T);
- Berechnen des Widerrufpseudonyms (Pr), das dem Token (SE) gemäß den zweiten Daten (D2) und einem öffentlichen Widerrufschlüssel (PUKr) zugeordnet ist; und
- Aktualisieren der Tokenstatusliste (Lr) mit dem Widerrufpseudonym (Pr).

8. Verfahren nach einem der vorstehenden Ansprüche, wobei ein Token (SE) ferner angepasst ist, um eine Authentifizierung eines Dienstanbieteranschlusses (SP_T) durchzuführen.

9. Verfahren nach einem der vorstehenden Ansprüche, wobei ein Dienstanbieteranschluss (SP_T) ferner angepasst ist, um eine Authentifizierung eines Tokens (SE) durchzuführen.

10. Verfahren nach einem der vorstehenden Ansprüche 1 bis 8, wobei der Widerrufverwaltungsanschluss (RM_T) und ein Token (SE) ferner angepasst sind, um eine gegenseitige Authentifizierung durchzuführen.

11. Verfahren nach einem der vorstehenden Ansprüche, wobei das mindestens eine Statusattribut (R) mit einer Signatur (S) signiert ist.

12. Verfahren nach den vorstehenden Ansprüchen, wobei die Signatur (S) durch das Token (S) gemäß dem mindestens einen Statusattribut (R) berechnet wird.

13. Verfahren nach dem vorstehenden Anspruch 11, wobei die Signatur (S) durch den Widerrufverwaltungsanschluss (RM_T) gemäß einer verblendeten oder teilweise verblendeten Nachricht (M) berechnet wird, die durch das Token (SE) gesendet wird.

14. Verfahren (M) nach einem der vorstehenden Ansprüche 11 bis 13, wobei die Signatur (S) berechnet wird:
- auf Anforderung des Dienstanbieteranschlusses (SP_T);
- bei einer Entscheidung des Tokens (SE).

15. Widerrufverwaltungssystem (RM_SYS) für eine Verwendung in dem Verfahren nach einem der vorstehenden Ansprüche, wobei das Widerrufverwaltungssystem (RM_SYS) konfiguriert ist, um mindestens ein Statusattribut (R) in dem Token zu erstellen oder zu aktualisieren und wobei ein Wert des einen Statusattributs (R) angibt, ob das Token (SE) von mindestens einem Dienstanbieteranschluss eines Dienstanbietersystems (SP_T) widerrufen wird oder nicht.

16. Dienstanbietersystem (SP_SYS) für eine Verwendung in dem Verfahren nach einem der vorstehenden Ansprüche 1 bis 14, das Dienstanbietersystem (SP_SYS) umfassend mindestens einen Dienstanbieteranschluss (SP_T), wobei der Dienstanbieteranschluss (SP_T) angepasst ist, um zu verifizieren, ob ein Token (SE) von ihm widerrufen wird oder nicht, wobei die Verifizierung auf einem Wert des mindestens einen Statusattributs (R) basiert, der angibt, ob der Token (SE) von mindestens einem Dienstanbieteranschluss (SP_T) des Dienstanbietersystems (SP_SYS) widerrufen wird oder nicht.

17. Verifizierungsverwaltungsverfahren (VFM) zum Verifizieren, ob ein Token (SE) von mindestens einem Dienstanbieteranschluss (SP_T) eines Dienstanbietersystems (SP_SYS) nach Anspruch 16 widerrufen wird oder nicht, wobei die Verifizierung auf mindestens einem Wert eines Statusattributs (R) des Tokens (SE) basiert und mittels eines Dienstanbieteranschlusses (SP_T) des Dienstanbietersystems (SP_SYS) durchgeführt wird.

18. Verifizierungsverwaltungsverfahren (VFM) nach Anspruch 17, wobei das Verifizierungsverwaltungsverfahren ferner umfasst:
- die Anforderung durch den Dienstanbieteranschluss (SP_T) an das Token (SE) für das mindestens eine Statusattribut (R), nachdem einer seiner Dienste (Sv) durch den Benutzer des Tokens (SE) angefordert wurde;
- die Übertragung durch das Token (SE) des mindestens einen Statusattributs (R) an den Dienstanbieteranschluss (SP_T);
- gemäß dem mindestens einen Statusattribut (R), die Verifizierung durch den Dienstanbieteranschluss (SP_T), falls das Token (SE) von ihm widerrufen wird oder nicht; und
- die Erteilung von Zugriff auf den Dienst (Sv) durch den Dienstanbieteranschluss (SP_T), falls das Token (SE) nicht widerrufen ist.

19. Sicherheitsverwaltungssystem (SYS), umfassend eine Vielzahl von Token (SE), ein Widerrufverwaltungssystem (RM_SYS) nach Anspruch 15 und ein Dienstanbietersystem (SP_SYS) nach Anspruch 16, umfassend mindestens einen Dienstanbieteranschluss (SP_T), wobei der Widerrufstatus des Tokens durch den Dienstanbieteranschluss durch das Widerrufverwaltungssystem (RM_SYS) verifiziert wird.

## Revendications

1. Procédé permettant de gérer l'état de révocation d'un jeton (SE) tout en protégeant la confidentialité de l'utilisateur du jeton, dans lequel l'état de révocation du jeton est géré par l'intermédiaire d'un système de gestion de révocation (RM_SYS), dans lequel le système de gestion de révocation (RM_SYS) est configuré pour créer ou mettre à jour au moins un attribut d'état (R) stocké dans le jeton, ledit au moins un attribut d'état (R) comprenant une valeur indiquant si le jeton (SE) est révoqué ou non à partir d'au moins un terminal fournisseur de services (SP_T) d'un système fournisseur de services (SYS), dans lequel ;
un terminal fournisseur de services (SP_T) est configuré pour :
- demander à partir dudit jeton (SE) l'au moins un attribut d'état (R) après que l'un de ses services (Sv) a été demandé par l'utilisateur dudit jeton (SE) ;
ledit jeton (SE) étant adapté pour :
- transmettre la valeur de l'attribut d'état (R) au terminal fournisseur de services (SP_T) à la demande dudit terminal fournisseur de services (SP_T) ;
le terminal fournisseur de service (SP_T) est en outre adapté pour :
- vérifier si ledit jeton (SE) est révoqué ou non, ladite vérification étant basée sur la valeur dudit attribut d'état (R) reçue à partir dudit jeton (SE).
- accorder l'accès audit service (Sv) si ladite valeur n'est pas une valeur de révocation.

2. Procédé selon la revendication précédente, dans lequel ledit système de gestion de révocation (RM_SYS) comprend un terminal de gestion de révocation (RM_T), ledit terminal de gestion de révocation (RM_T) comprenant une liste d'états de jeton (Lr) qui comprend des premières données (D1) correspondant aux jetons (SE) qui sont révoqués ou correspondant aux jetons (SE) qui ne sont pas révoqués, et ledit terminal de gestion de révocation (RM_T) étant adapté pour :
- lire lesdites premières données (D1) d'un jeton (SE) ;
- vérifier lesdites premières données (D1) par rapport à la liste d'états de jeton (Lr) ;
- mettre à jour l'au moins un attribut d'état (R) dudit jeton (SE) selon ladite vérification.

3. Procédé selon les revendications précédentes, dans lequel les premières données (D1) sont un pseudonyme de révocation (Pr) ou un identifiant (Id) du jeton (SE).

4. Procédé selon l'une quelconque des revendications précédentes, dans lequel la mise à jour d'au moins un attribut d'état (R) dudit jeton (SE) est effectuée par le terminal de gestion de révocation (RM_T) lors de la demande dudit terminal fournisseur de services (SP_T) si ledit au moins un attribut d'état (R) n'est pas disponible ou pas à jour.

5. Procédé selon l'une quelconque des revendications précédentes, dans lequel :
- le jeton (SE) est en outre adapté pour calculer un pseudonyme de service (Ps) et pour transmettre ledit pseudonyme de service (Ps) audit terminal fournisseur de services (SP_T) lorsqu'un service (Sv) a été demandé par l'utilisateur dudit jeton (SE), ledit pseudonyme de service (Ps) étant basé sur une clé publique de service (PUKs) dudit terminal fournisseur de services (SP_T) ;
- le terminal fournisseur de services (SP_T) demande à l'au moins un attribut d'état (R) dudit jeton (SE) d'utiliser un pseudonyme de service (Ps) dudit jeton (SE).

6. Procédé selon l'une quelconque des revendications 2 à 5 précédentes, dans lequel :
- ledit système de gestion de révocation (RM_SYS) comprend en outre un terminal de gestion d'identité (ID_T) adapté pour :
- définir un identifiant (Id) pour un jeton (SE) ;
- calculer le pseudonyme de révocation (Pr) associé à un jeton (SE) selon ledit identifiant (Id) ;
- si ledit jeton (SE) doit être inclus dans la liste d'états de jeton (Lr), transmettre ledit pseudonyme de révocation (Pr) associé audit jeton (SE) audit terminal de gestion de révocation (RM_T) ;
- ledit terminal de gestion de révocation (RM_T) est en outre adapté pour mettre à jour ladite liste d'états de jeton (Lr) avec ledit pseudonyme de révocation (Pr).

7. Procédé selon l'une quelconque des revendications 2 à 5 précédentes, dans lequel :
- ledit système de gestion de révocation (RM_SYS) comprend en outre un terminal de gestion d'identité (ID_T) adapté pour :
- définir un identifiant (Id) pour un jeton (SE) ;
- si ledit jeton (SE) doit être inclus dans la liste d'états de jeton (Lr), transmettre des secondes données (D2) représentatives dudit jeton (SE) audit terminal de gestion de révocation (RM_T) ; et
- ledit terminal de gestion de révocation (RM_T) est en outre adapté pour :
- recevoir lesdites secondes données (D2) depuis ledit terminal de gestion d'identité (ID_T) ;
- calculer le pseudonyme de révocation (Pr) associé audit jeton (SE) selon lesdites secondes données (D2) et une clé publique de révocation (PUKr) ; et
- mettre à jour ladite liste d'états de jeton (Lr) avec ledit pseudonyme de révocation (Pr).

8. Procédé selon l'une quelconque des revendications précédentes, dans lequel un jeton (SE) est en outre configuré pour mettre en oeuvre une authentification d'un terminal fournisseur de services (SP_T).

9. Procédé selon l'une quelconque des revendications précédentes, dans lequel un terminal fournisseur de services (SP_T) est en outre configuré pour effectuer une authentification d'un jeton (SE).

10. Procédé selon l'une quelconque des revendications 1 à 8 précédentes, dans lequel ledit terminal de gestion de révocation (RM_T) et un jeton (SE) sont en outre adaptés pour effectuer une authentification mutuelle.

11. Procédé selon l'une quelconque des revendications précédentes, dans lequel ledit au moins un attribut d'état (R) est signé avec une signature (S).

12. Procédé selon les revendications précédentes, dans lequel ladite signature (S) est calculée par le jeton (S) selon l'au moins un attribut d'état (R).

13. Procédé selon la revendication 11 précédente, dans lequel ladite signature (S) est calculée par le terminal de gestion de révocation (RM_T) selon un message masqué ou partiellement masqué (M) envoyé par ledit jeton (SE).

14. Procédé selon l'une quelconque des revendications 11 à 13 précédentes, dans lequel ladite signature (S) est calculée :
- à la demande du terminal fournisseur de services (SP_T) ;
- sur décision du jeton (SE).

15. Système de gestion de révocation (RM_SYS) destiné à être utilisé dans le procédé selon l'une quelconque des revendications précédentes, le système de gestion de révocation (RM_SYS) étant configuré pour créer ou mettre à jour au moins un attribut d'état (R) dans le jeton et une valeur dudit attribut d'état (R) indiquant si le jeton (SE) est révoqué ou non d'au moins un terminal fournisseur de services d'un système fournisseur de services (SP_T).

16. Système fournisseur de services (SP_SYS) destiné à être utilisé dans le procédé selon l'une quelconque des revendications 1 à 14 précédentes, le système fournisseur de services (SP_SYS) comprenant au moins un terminal fournisseur de services (SP_T), ledit terminal fournisseur de services (SP_T) étant adapté pour vérifier si un jeton (SE) est révoqué de celui-ci, ou non, ladite vérification étant basée sur une valeur dudit au moins un attribut d'état (R) indiquant si ledit jeton (SE) est révoqué ou non à partir d'au moins un terminal fournisseur de services (SP_T) du système fournisseur de services (SP_SYS).

17. Procédé de gestion de vérification (VFM) pour vérifier si un jeton (SE) est révoqué ou non d'au moins un terminal fournisseur de services (SP_T) d'un système fournisseur de services (SP_SYS) selon la revendication 16, ladite vérification étant basée sur au moins une valeur d'un attribut d'état (R) dudit jeton (SE) et étant réalisée au moyen d'un terminal fournisseur de services (SP_T) dudit système fournisseur de services (SP_SYS).

18. Procédé de gestion de vérification (VFM) selon la revendication 17, dans lequel ledit procédé de gestion de vérification comprend en outre :
- la demande par ledit terminal fournisseur de services (SP_T) audit jeton (SE) pour l'au moins un attribut d'état (R) après que l'un de ses services (Sv) a été demandé par l'utilisateur dudit jeton (SE) ;
- la transmission par ledit jeton (SE) de l'au moins un attribut d'état (R) audit terminal fournisseur de services (SP_T) ;
- selon ledit au moins un attribut d'état (R), la vérification par ledit terminal fournisseur de services (SP_T) afin de savoir si ledit jeton (SE) est révoqué de celui-ci, ou non ; et
- l'autorisation d'accès audit service (Sv) par ledit terminal fournisseur de services (SP_T) si ledit jeton (SE) n'est pas révoqué.

19. Système de gestion de sécurité (SYS) comprenant une pluralité de jetons (SE), un système de gestion de révocation (RM_SYS) selon la revendication 15 et un système fournisseur de services (SP_SYS) selon la revendication 16 comprenant au moins un terminal fournisseur de services (SP_T), dans lequel l'état de révocation du jeton est vérifié par le terminal fournisseur de services par l'intermédiaire du système de gestion de révocation (RM_SYS).
